Europäisches Patentamt

European Patent Office

Office européen des brevets

(11) Publication number: 0 587 019 A2

# EUROPEAN PATENT APPLICATION

(21) Application number: 93113890.3

(22) Date of filing: 31.08.93

(51) Int. Cl.⁵: **G11B 7/013**, G11B 7/00, G11B 20/12, G11B 19/28

(30) Priority: 03.09.92 JP 235607/92

(43) Date of publication of application:
16.03.94 Bulletin 94/11

(84) Designated Contracting States:
FR IT NL

(71) Applicant: HITACHI, LTD.
6, Kanda Surugadai 4-chome
Chiyoda-ku, Tokyo 101(JP)

(72) Inventor: Minemura, Hiroyuki
32-6-404, Nishinarusawacho 1-chome
Hitachi-shi(JP)
Inventor: Sato, Yoshio
3-15, Hanayamacho-1chome
Hitachi-shi(JP)
Inventor: Fushimi, Tetsuya
Yuhoryo, 20-3, Ayukawacho-6-chome
Hitachi-shi(JP)
Inventor: Tsuboi, Nobuyoshi
2081, Ishigamitojuku,
Tokaimura

Naka-gun, Ibaraki-ken(JP)
Inventor: Yasukawa, Saburo
20-13, Higashioshima-1-chome
Katsuta-shi(JP)
Inventor: Sugita, Tatsuya
Izumigamoriryo, 20-1,
Mizukicho-2-chome
Hitachi-shi(JP)
Inventor: Saito, Atsushi
11-12, Kandori-2-chome
Ichikawa-shi(JP)
Inventor: Matsumoto, Kiyoshi
8-1-6, Nishikoigakubo-3-chome
Kokubunji-shi(JP)
Inventor: Tsunoda, Yoshito
19-2-203, Ishinazakacho-1-chome
Hitachi-shi(JP)

(74) Representative: Patentanwälte Beetz - Timpe -
Siegfried Schmitt-Fumian - Mayr
Steinsdorfstrasse 10
D-80538 München (DE)

(54) Optical disk system and information processing system using the same.

(57) An optical disk system and an information processing system using the same. By constituting zones (51, 52) for MCLV (Modulated Constant Linear Velocity) drive in conformance with designated partition capacity in an optical disk medium (10) while overwriting therein sector addresses (31), a high-speed access comparable to a CAV (Constant Angular Velocity) system as well as a large capacity comparable to CLV (Constant Linear Velocity) system can be realized.

FIG. II

10 OPTICAL DISK MEDIUM

30 SECTOR

ZONE #9

#3
#2
#1

120 SEGMENT

100
SERVO
MARK

157 DATA FIELD

ZONE #9

N x 2 BYTES

#3

N+2N/8

#2

N+N/8

#1

N

BACKGROUND OF THE INVENTION

The present invention relates to an optical disk system for recording and/or reproducing information on and/or from tracks formed in a coaxial circular pattern or in a spiral pattern on a disk-like recording medium by illuminating the track with a focused laser beam as well as an optical disk medium used in the optical disk system. In more particular, the invention is concerned with an optical disk system as well as an optical disk medium which allow storage capacity and access velocity to be set optionally in conformance with applications to which they are intended. Further, the invention is concerned with an information processing system in which the optical disk system as well as the optical disk medium mentioned above are employed.

In recent years, performance of the information processing systems for the personal use such as typified by so-called personal computers and work stations have been improved surprisingly in respect to performances, and the amount of information which can be handled by the information processing system has increased by leaps and bounds from the level of character information to the level of sound and image information. Under the circumstances, there arises a great demand for an optical disk which can afford a large capacity with low bit cost as a memory device for the personal-purpose information processing system.

The optical disks may generally be classified into a reproduction dedicated type (reproduction-only type), an overwrite type and a rewrite type. In the optical disk of reproduction-dedicated type which is typified by a disk commercially available under the name of compact dick, information is recorded in the form of convexities and concavities on a substrate by means of a stamper or the like. This type optical disk is suited as an inexpensive information recording medium which can be manufactured on a mass-production basis. In the compact disk, greater importance is put on the attempt increasing the storage capacity rather than the attempt for reducing the access time. Thus, the compact disk is suited for reproduction of music. For driving the compact disk upon reproduction of the information as recorded, there is generally adopted a CLV (Constant Linear Velocity) drive system (i.e., drive system for rotating the disk at a constant peripheral or linear velocity). On the other hand, in the case of the optical disks of the overwrite type and the rewrite type, information is recorded on a thin recording film in the form of pits, phase changes or inversion of magnetization as brought about by illuminating the recording film with a focused laser beam. For driving the optical disks of these types, there is conventionally adopted a CAV (Constant Angular Velocity) drive system (i.e., drive system for recording and reading information by rotating the disk at a constant angular velocity or by varying the recording density, to say in another way) which allows a desired data area on the disk to be accessed at a high speed. Thus, the disks of the overwrite type and the rewrite type are suited for an external memory of the computer, which is typified by a 3.5-inch magnetooptical disk. Examples of these disks and drives therefor are discussed in a Japanese periodical "NIKKEI BYTE", (Jan. 1992), pp. 120-133.

As described above, in the optical disk adapted to be rotated by the CLV drive system, the peripheral or linear velocity of the rotating optical disk is maintained constant. Consequently, the information can be recorded in a constant linear density, which is effective for increasing the storage capacity of the optical disk medium. However, the rotation speed of the disk has to be changed continuously in dependence on the position of the track in the radial direction of the disk. Consequently, limitation is inevitably imposed on the access time due to inertia of rotation of the disk.

On the other hand, in the case of the CAV drive system, the rotation speed of the optical disk is held constant, which is thus effective for reduction of the access time. However, the information recording density must be decreased along the redial direction of the disk. As a consequence, the storage capacity of the optical disk for the CAV drive system is about two thirds of that of the optical disk for the CLV system.

Under the circumstances, there has been developed a MCLV (Modulated Constant Linear Velocity) type optical disk system in which an optical disk medium is divided or partitioned into a plurality of coaxial circular or spiral CLV zones, wherein in each of the CLV zones, the rotation speed of the disk is decreased in reverse proportion to the radial distance from the innermost periphery of the disk. Thus, in the MCLV system, a high-speed access can be realized within a same zone, and at the same time a large storage capacity comparable to that of the CLV disk can be assured because the linear density of records is substantially constant within one and the same zone.

On the other hand, in a sample servo system which is one of the servo systems employed for controlling the disk drive system, the data, focusing error and the tracking error are detected with the aid of a reference clock signal in a time sharing manner, which contributes simplification of structure of the optical read/write device and hence to miniaturization of the optical disk system as a whole. The reference signal clock is generated by a PLL (Phase Locked Loop) circuit tuned to a clock signal reproduced from clock pits formed in the optical disk medium.

The storage capacity of the optical disk is as large as 128 MB even in a miniature disk of 3.5 inches in diameter. Accordingly, when the optical disk is employed as an external memory of the personal computer, it is preferable to divide the recording surface area into a plurality of logical drive areas (zones or partitions) each of a desired size smaller than 32 MB in dependence on the applications to which the optical disk is intended, as in the case of a magnetic hard disk, in view of the limitation imposed on the address space of a CPU (Central processing Unit).

However, an approach for combining the MCLV system with the sampled servo system to thereby implement a miniature optical disk memory system of high performance will encounter a difficulty. More specifically, in the case of the MCLV system, the prescribed rotation speed of the disk changes discretely from one to another zone. Accordingly, when the access is to be changed from one zone to another zone, the rotation speed of the disk can not change abruptly in correspondence to the change of the zones to be accessed, resulting in that the period of the clock signal changes discontinuously, which makes impossible the tuning of the PLL circuit and hence generation of the reference clock signal. As a consequence, the tracking will be lost upon change of the zone to be accessed, incurring increase in the access time. Furthermore, in the conventional optical disk medium, the addresses and the zones are previously formatted (i.e., preformatted) in the disk substrate in the form of concavities and convexities. Consequently, when partitions are created, there arises such a case where a plurality of CAV zones which differ from one another in respect to the rotation speed coexist within one and the same partition, as a result of which the waiting state awaiting the prescribed disk rotation speed to be reached will occur very frequently, whereby the access time is virtually elongated.

SUMMARY OF THE INVENTION

It is therefore an object of the present invention to provide an optical disk medium and an optical disk system which can ensure a large storage capacity and a high-speed access by combining a sampled servo system and a MCLV system while solving the out-of-tracking problem mentioned above.

In view of the above and other objects which will become apparent as description proceeds, it is taught according to an aspect of the present invention to employ two phase locked loops (PLLs) for the servo control of access and data read/write operations, respectively, for thereby generating two reference clock signals for the servo control and the data read/write operation, respectively, from a signal reproduced from the optical disk. Further, servo marks each including clock and wobble pits as preformatted in the optical disk medium are arrayed radially as in the case of the CAV system. With this arrangement, the period of the clock signal reproduced from the clock pits can change continuously. Thus, the servo PLL can prevent occurrence of the out-of-tracking event.

On the other hand, in conjunction with the recording of data, the number of sectors per track is progressively increased in the direction toward the outermost periphery of the disk so that the linear record density can be maintained substantially constant, as in the case of the MCLV system. By recording the servo mark in conformance with the CAV standards while recording the data in conformance with the MCLV standards with the servo mark and the data being reproduced through the respective PLLs independent of each other, there is realized the MCLV system which can avoid the out-of-tracking (out-of-servo) problem due to the access change from one to another zone.

In a preferred mode for carrying out the invention, the sector address can be overwritten in the optical disk medium upon initialization thereof, whereby the zones can arbitrarily be altered or modified. In this conjunction, the ratio of the zone capacity to the corresponding partition capacity may be set to be "1 to n" or "n to 1" (where $\underline{n}$ represents a natural number) and more preferably "1 to 1". By virtue of this feature, it is possible to suppress to a minimum the probability of the data being recorded or reproduced across two or more zones within a same partition, whereby the effective access time for a file can be shortened. In this conjunction, the number of sectors as overwritten per track is increased progressively toward the outer periphery of the disk so that the linear record density of data can remain substantially constant. The address to be reproduced through the servo PLL is recorded such that a unit center angle between adjacent pits is constant, as will be described in detail later on. In that case, the addresses can be read out correctly even in the case of the access across the zones, resulting in that the access to a desired data area is speeded up.

Thus, there is provided according to the present invention an optical disk system which has a large storage capacity comparable to that of the CLV system and which can realize a high-speed access comparable to that of the CAV system while allowing the partition capacity and the zone capacity to be selected as desired. Further, by using only one zone divisor, the optical disk medium according to the invention can be reproduced by the CAV optical disk system. This means that one optical disk medium can be used either in the CAV or the MCLV optical disk system in dependence on the applications of the disk contemplated by the user. Thus, the flexibility of the optical disk medium in the use thereof can be enhanced.

As will be appreciated from the above, the invention provides an optical disk medium and an optical disk system which permit the partitions to be set as desired and which can ensure compatibility of a high-speed access and a large storage capacity. The optical disk medium according to the invention can be used in the personal-use oriented information processing system typified by the personal computer with significant advantage that the storage and edition of sound and image data can be much facilitated owing to availability of a large capacity storage medium.

BRIEF DESCRIPTION OF THE DRAWINGS

Fig. 1 is a diagram showing a preformat on an optical disk medium according to an embodiment of the invention;

Fig. 2 is a diagram showing a preformat on an optical disk medium according to another embodiment of the invention;

Fig. 3 is a diagram showing a preformat on an optical disk medium according to a further embodiment of the invention;

Fig. 4 is a diagram for illustrating overwrite of sector address on an optical disk according to an embodiment of the invention;

Fig. 5 is a diagram for illustrating overwrite of sector address on an optical disk according to an embodiment of the invention;

Fig. 6 is a diagram for illustrating division of an optical disk into partitions;

Fig. 7 is a diagram showing storage of system information in an optical disk medium according to the invention;

Fig. 8 is a flow chart showing an initialization of an optical disk medium according to the invention;

Fig. 9 is a view for graphically illustrating an estimated relation between the number of zones resulting from division of an optical disk medium and a storage capacity of the disk according to the invention;

Fig. 10 is a view for graphically illustrating an estimated relation between access time and a number of zones transversed upon accessing in the optical disk medium according to the invention;

Fig. 11 is a diagram showing a preformat of an optical disk medium according to an embodiment of the invention;

Fig. 12 is a flow chart illustrating a processing executed by a drive controller upon insertion of an optical disk medium in an optical disk drive;

Fig. 13 is a diagram showing a method of setting partitions and zones on an optical disk medium according to the invention;

Fig. 14 is a diagram showing another method of setting partitions and zones on an optical disk medium according to the invention;

Fig. 15 is a diagram showing a further method of setting partitions and zones on an optical disk medium according to the invention;

Fig. 16 is a diagram illustrating a managing method of directory areas provided on a partition-by-partition basis in the optical disk medium according to the invention;

Fig. 17 is a diagram illustrating a managing method of directory areas secured on a zone-by-zone basis in the optimal disk medium according to the invention;

Fig. 18 is a diagram showing a main directory secured for managing record files on the optical disk medium according to the invention;

Fig. 19 is a flow chart illustrating operations for information recording/reproduction on the optical disk medium according to the invention;

Fig. 20 is a block diagram showing a general arrangement of an optical disk drive according to another embodiment of the invention;

Fig. 21 is a block diagram showing a general arrangement of a phase-change type optical disk drive controller according to another embodiment of the invention;

Fig. 22 is a block diagram showing a general arrangement of another embodiment of the optical disk drive according to the invention;

Fig. 23 is a diagram showing a multi-layer structure of an optical disk medium according to the invention;

Fig. 24 is a view for graphically illustrating results of experiments and analyses conducted for determining linear-velocity dependence of the recording characteristics of optical disk medium according to the invention;

Fig. 25 is a block diagram showing a system in which an optical disk drive is connected to a so-called personal computer;

Fig. 26 is a block diagram showing a system in which an optical disk medium is made use of as an interface between a notebook-size personal computer and a terminal of a large scale computer; and

Fig. 27 is a perspective view showing a notebook-size personal computer according to an embodiment of the invention.

## DESCRIPTION OF THE PREFERRED EMBODIMENTS

Now, the present invention will be described in detail in conjunction with exemplary or preferred embodiments thereof by reference to the drawings.

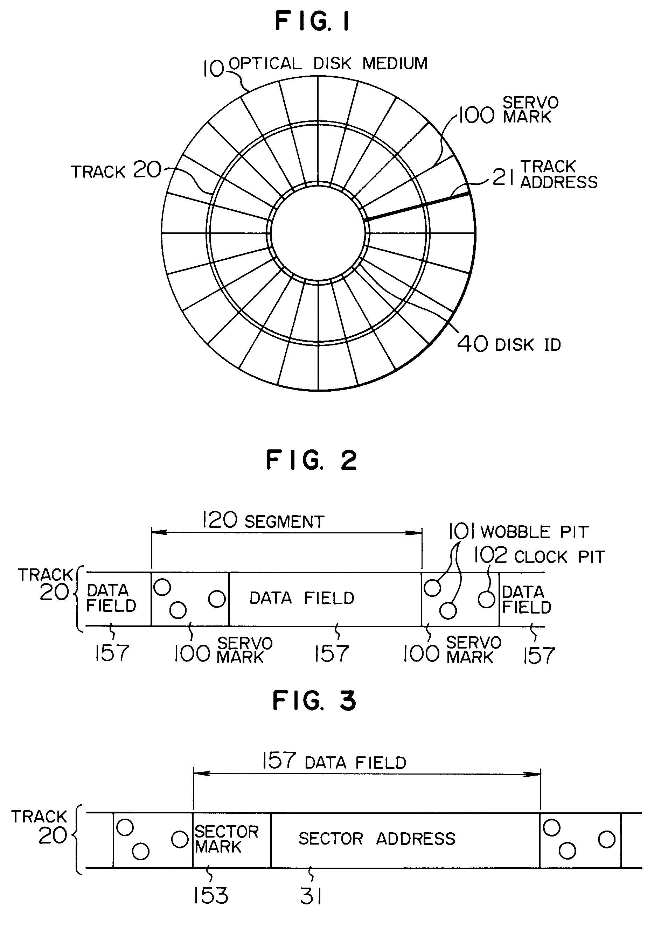

Figs. 1 to 3 show an optical disk medium implemented in a sampled serve format according to an embodiment of the invention. The optical disk medium generally denoted by a reference numeral 10 is constituted by a substrate in which a spiral track 20, a track address area 21 and a disk ID area 40 are previously formatted (i.e., preformatted) in the form of concavities/convexities. By adopting the sampled servo format in the optical disk medium, it is possible to derive a record data signal and a tracking error signal by processing a single detection signal in a time sharing manner, which in turn means that an optical system for a write/read head can be simplified, to an advantage. On the other hand, unless the servo marks are detected at a predetermined timing, not only the recording/reproduction of data but also following of the track by a light beam becomes impossible. In the conventional MCLV (Modulated Constant Linear Velocity) system, densities of the data and the servo marks change from one to another zone. Consequently, when access is made to an adjacent zone from a given one, the servo mark reproduction frequency changes discretely, rendering it impossible to follow the track with the light beam, as a result of which the access operation must be halted until the rotation number of the disk has attained a prescribed value. Under the circumstances, the present invention proposes that the servo marks 100 as preformatted are arrayed radially from the center of the optical disk 10 so that the servo marks have a constant density per rotation angle independent of the zones, as in the case of the CAV (Constant Angular Velocity) system. With such arrangement, the servo mark reproduction timing can change continuously as the rotation speed or velocity of the disk changes, when the optical head passes a boundary between two zones which differ in respect to the prescribed disk rotation speed. Thus, the servo marks can constantly be followed, making it possible to follow the track with the light beam. The recording density of data is changed from one to another zone independent of the servo marks.

Parameters required for operating the optical disk drive system are recorded in the innermost or outermost track of the optical disk medium 10 in terms of the prescribed disk rotation speed and the prescribed modulation frequency. These parameters are preformatted in the disk identification information area referred to simply as the disk ID area 40 and includes such pieces of information as the type of the disk medium, reflectivity, recording sensitivity and other information as the attributes of the optical disk medium 10. These parameters are fetched into an optical disk drive controller to be processed upon initialization or insertion of the disk.

Referring to Fig. 2, segments 120 each composed of a servo mark 100 and a data field 157 are formed continuously on the track 20. The servo mark 100 is composed of wobble pits 101 for the tracking servo control and a clock pit 102 for the tuning of a reproducing circuit.

Assuming that the center value of the rotation speed of the optical disk medium 10 is 3600 rpm, it is sufficient to form about one thousand servo marks 100 per turn of the track on the presumption that the sampling is effected at 60 kHz for the purpose of controlling stably the tracking operation.

As shown in Fig. 3, a sector address of each sector is written and recorded in the data field 157 together with a sector mark 153 for identification of the sector address 31 upon initialization of the optical disk medium. For the number of partitions and capacity of each partition as designated in the initialization, the zone and the disk rotation speed optimal for the track number are determined on the basis of the disk ID information 40, wherein information such as the number of partitions, the number of zones, the rotation speed or velocity and other is written in the data field of a prescribed track. (This information is referred to as the volume ID). At this time point, the number of data bytes which is allowed to recorded in the data field can be determined, whereby the number of sectors for one track can also be determined. Accordingly, at each of the starts of the individual sectors on the track, the sector mark for detecting the start of the sector is recorded.

The present invention is applied not only to an optical disk system of the sampled servo type but also to that of a continuous servo type as well as a medium therefor.

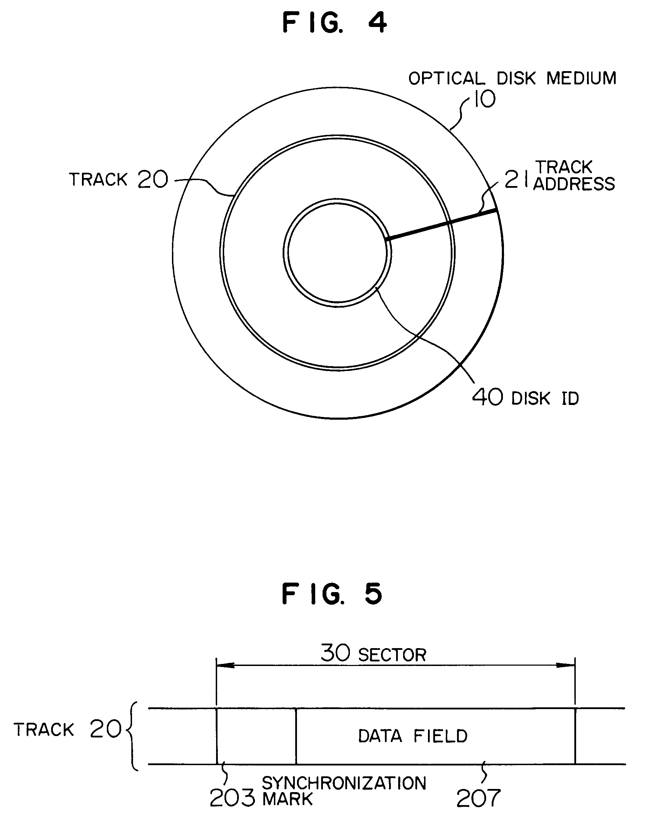

Figs. 4 and 5 show a track format of an optical disk medium for a continuous servo system according to another embodiment of the invention.

There is provided a spiral track 20 made up of a land and a groove. In Figs. 4 and 5, reference numeral 21 designates the track address area , and 40 denotes the disk ID area, as in the case of the sampled servo format described previously. In the continuous servo track, a track error signal can always be obtained on the basis of diffraction. Accordingly, neither the clock pit nor the wobble pits are provided. Referring to Fig. 5, the sector is comprised of a data field 207 and a synchronization mark 203. More specifically, for data reproduction from the data field, one synchronization mark 203 is formed for each of the sectors. The synchronization mark 203 includes a sector mark part, a VFO (Valuable Frequency Oscillator) part, a SYNC data part and others.

The track addresses are represented by serial numbers allocated sequentially to the individual tracks, respectively, for recognition or identification thereof, wherein one or plural track addresses are preformatted on the track together with a pit train (synchronization marks such as sector mark, VFO, address mark and other) for detecting the track address with a frequency corresponding to a linear velocity which is constant for all the tracks. The track addresses 21 are recorded radially relative to the center of the optical disk medium. In the optical disk medium according to the instant embodiment of the invention, the sector addresses are written upon initialization of the disk.

As a recording material for the optical disk medium of the sampled servo type or continuous servo type mentioned above, a magnetooptical recording material such as TeFeCo or the like or a phase-change type optical recording material such as InSbTe or the like may preferably be used.

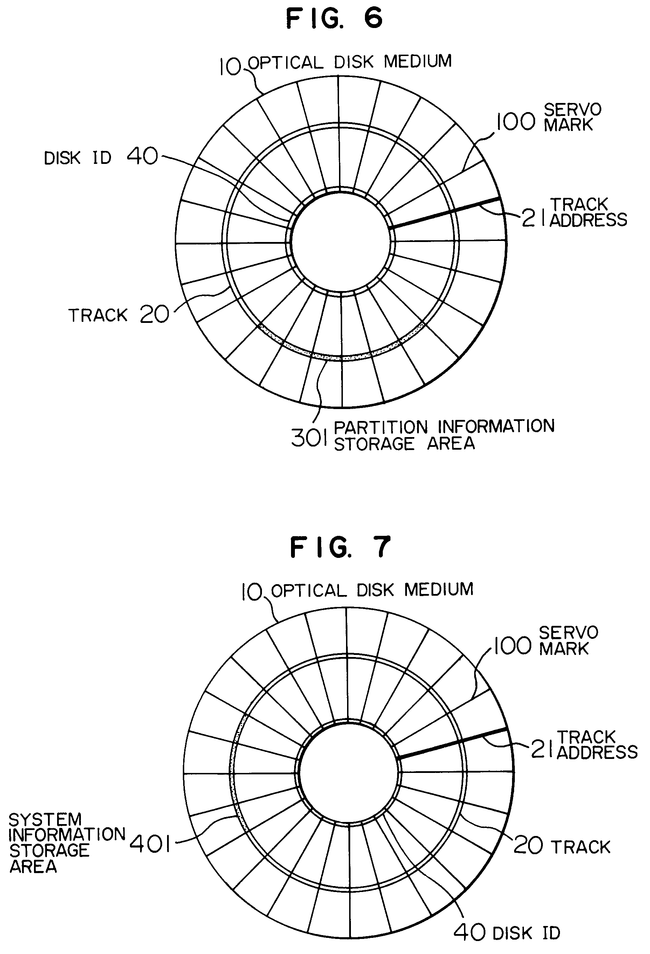

Fig. 6 is a diagram for illustrating storage of information designated by the user upon initialization of the optical disk medium 10.

In dependence on the number of the partitions and the capacity of each of the individual partitions as designated by the user, the optical disk drive controller divides the optical disk medium into a plurality of coaxial circular zones each of a constant rotation speed. Further, the partition information such as the number of partitions, the number of zones, the rotation speed, names, capacity and other is written in a partition information storage area 301 in a predetermined format.

Fig. 7 is a diagram for illustrating storage of the designated system information by the recording/reproduction system of the optical disk drive upon initialization of the optical disk medium 10. The information required for the optical disk drive to perform the recording/reproduction control for the optical disk medium 10 includes the number of bytes per segment, the number of segments per sector, cluster size and the like. This information is written in a system information storage area 401 on the optical disk medium 10 in a prescribed format.

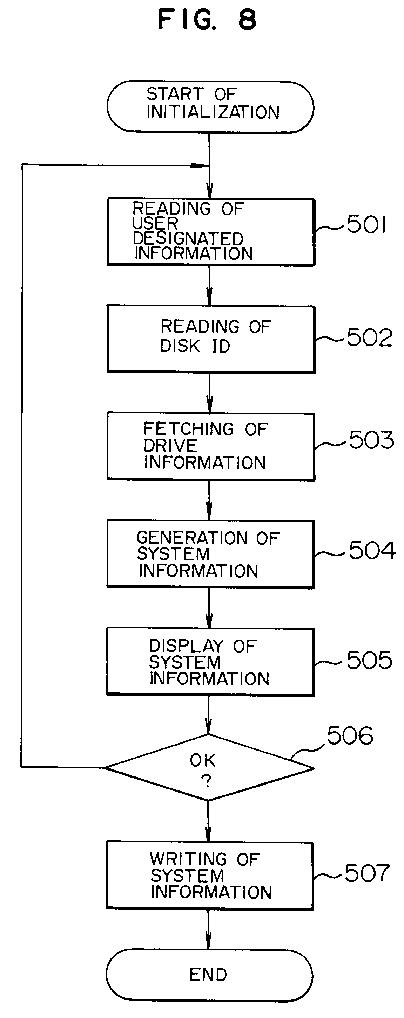

Fig. 8 is a flow chart for illustrating an initialization processing. Referring to the figure, the partition information as designated by the user is received in a step 501, which is then followed by a step 502 where the disk ID 40 is fetched from the optical disk medium 10. In a step 503, information defined previously for the optical disk drive is fetched. In a next step 504, the system-oriented information is created on the basis of the parameters mentioned previously. After confirmation by the user in steps 505 and 506, the information designated by the user as well as the system-oriented information are recorded in the respective storage areas.

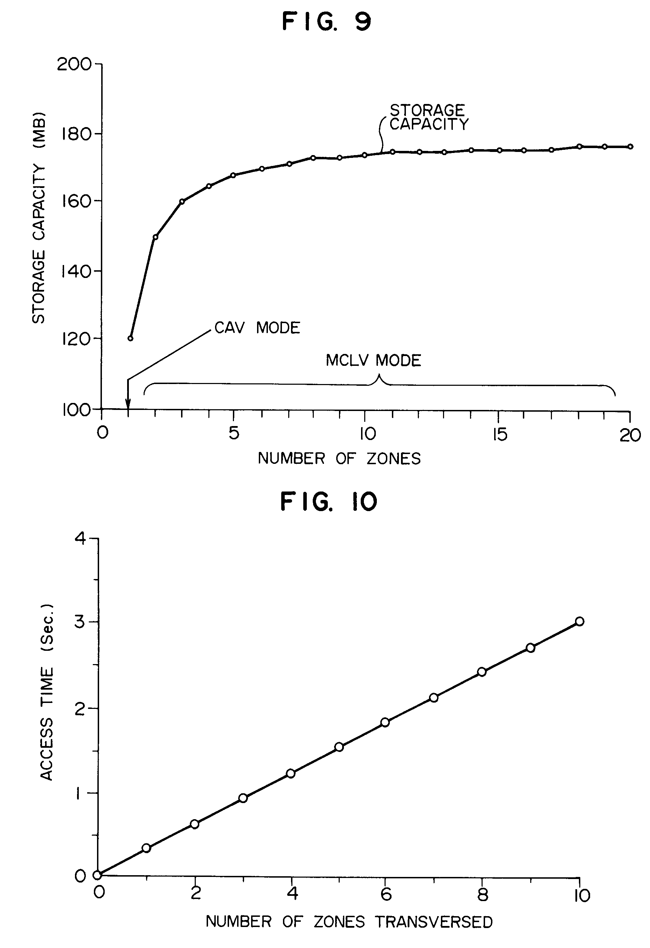

Figs. 9 and 10 illustrate graphically changes in the characteristics of an optical disk as brought about in dependence on the zone division methods as adopted. More specifically, Fig. 9 shows graphically an estimated relation between the number of zones resulting from division of a single optical disk medium and a storage capacity of the disk. For the estimation, it is assumed that the optical disk medium has a diameter of 65 mm, the data field ranges from 30 to 60 mm, the sampled servo is adopted, the center value of the disk rotation number is 3600 rpm, a 8-10 data modulation is adopted, the basic data pulse width or duration is 90 ns, the storage capacity per sector is 512 bytes, and that the individual zones are formed by dividing equally the optical disk medium in the radial direction. In the figure, the number of zone equal to "1" (one) represents indicates the CAV mode. As can be seen in Fig. 9, the overall storage capacity of the disk increases as the number of zones resulting from the division increases, wherein in a range where the number of zones exceeds "10" (ten), the overall storage capacity remains substantially constant at about 170 MB.

Fig. 10 illustrates estimation of the access time on the assumption that the access is performed by transversing the zones, the specifications of the optical disk medium are the same as those mentioned above, the time required for accessing the zone is 30 ms and that the waiting time required for the rotation velocity of the disk to become stable is 300 ms. As can be seen in the figure, the access to data files across two or more zones is accompanied with a time lag due to corresponding rotation of the disk when compared with the access to the data file stored in one and the same zone. Accordingly, the division of the disk into the zones should preferably be so realized that the file access can be closed or ended within a single zone as far as possible. When the number of zones as divided increases, the capacity of the single zone decreases, as a result of which probability or likelihood of the access across two or more zones increases. In view of this fact, it is preferred that the disk should be divided into ten or less zones.

In the case of a conventional MSDOS personal computer, it is desirable that the capacity of the disk should be smaller than 32 MB in order to allow the disk to be recognized as one area in view of limitation imposed to the address space of the CPU. For this reason, there is widely adopted a method of dividing a single disk into a plurality of partitions and managing these partitions as separate devices, respectively. Accordingly, in the case of the optical disk medium having a storage capacity greater than 100 MB inclusive, the partitions are formed in a number ranging from four to eight wile establishing one-to-one correspondence between the partitions and the zones. In that case, not only a relatively large memory capacity becomes available but also the access time can be reduced to 30 ns or less.

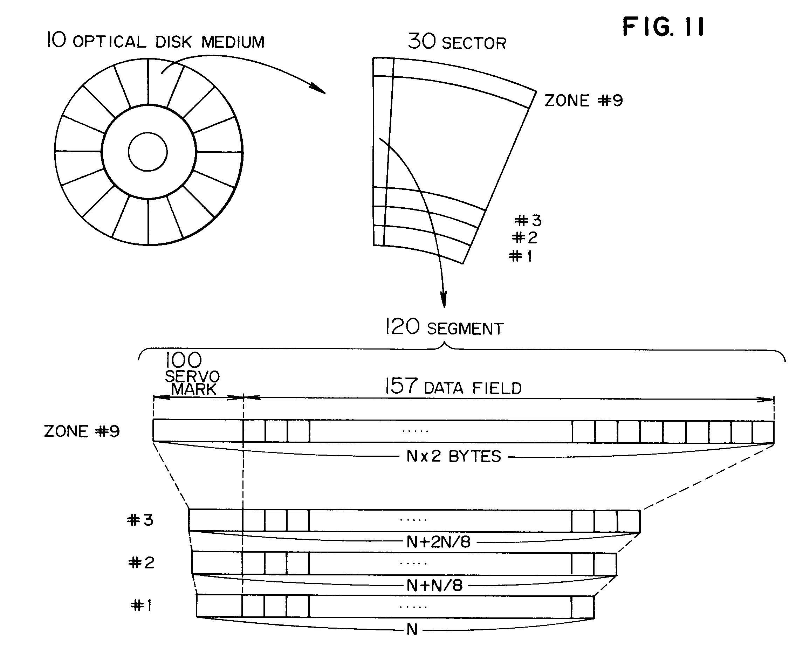

Fig. 11 is a diagram showing a configuration of the optical disk medium according to an embodiment of the invention. The illustrated optical disk medium is divided into nine zones of an equal width between the innermost track and the outermost track. Diameter of the optical disk medium is 64 mm. The innermost track of the recording area has a diameter of 30 mm while that of the outermost track is 60 mm. Further, the optical disk medium 10 is divided into sixteen sectors with each of the sectors being divided into forty-three segments. The zone identification numbers of #1 to #9 are allotted to the zones serially from the innermost to the outermost zone. The innermost zone #1 is adapted to store data of $S(1) = N$ bytes per segment. In the zone #2 adjacent to the innermost one, there are recorded data of $S(2) = N + N/(n-1)$ bytes per segment, wherein $n$ represents the number of the zones (i.e., nine in this case). Similarly, the outermost zone #9 is adapted to record or store data of $S(9) = 2N$ bytes per segment. In general, the data storage capacity $S(i)$ per segment of the i-th zone can be given by

$$S(i) = S(1) + S(1)(i - 1)/(n - 1)$$

With the division of the optical disk medium as described above, the data record density per segment can be made to be substantially constant. The number of data bytes recorded per segment depends on the type of modulation as adopted. When the 8-10 modulation is adopted with a shortest mark length of about 0.6 $\mu$m, it is possible to record data of 24 bytes per segment in the innermost zone #1. The total storage capacity of the optical disk medium having a track pitch of 1.5 $\mu$m amounts to about 160 MB in contrast to that of the CAV medium whose capacity is about 110 MB.

In the above description, it is assumed that the optical disk medium is 64 mm in diameter. However, this is only for the illustrative purpose. It should be appreciated that the size of the disk, the number of sectors, the number of segments, the type of modulation and other can be altered or modified without departing from the spirit of the invention.

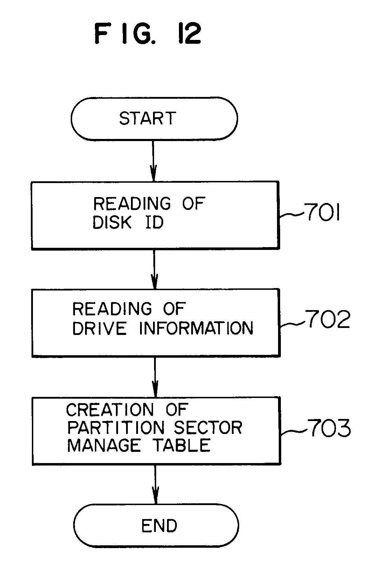

Fig. 12 illustrates in a flow chart the processing performed by a drive controller when an optical disk medium 10 is inserted in an optical disk drive. Referring to the figure, the drive controller reproduces the disk ID information 40 stored at a prescribed track position (step 701) to thereby fetch the information concerning the laser power for reproduction and/or recording, which is then followed by a step 702 where the partition information, zone information, rotation velocity information and others of the optical disk medium are reproduced and fetched from the relevant track address. On the basis of the information as fetched, a partition sector manage table is created (step 703), whereupon instructions issued from a host computer are executed.

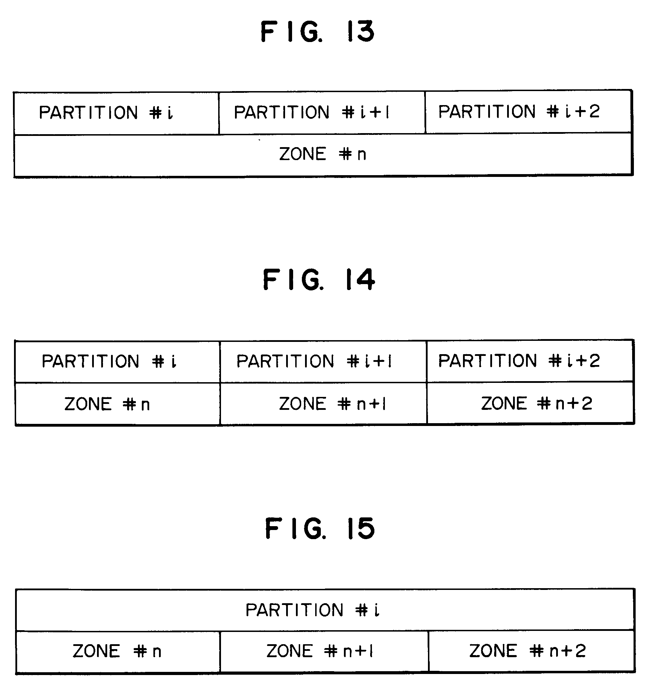

Figs. 13 to 15 illustrate relations between the partitions and the zones. The partition represents a logical file while the zone represents an area where the rotation speed or velocity of the optical disk is constant. In respect to the sizes of the partition and the zone, there may be conceived three relations. More specifically, Fig. 13 shows a case where the size of the partition is smaller than that of the zone and Fig. 14 shows a case where the size of the partition is equal to that of the zone. It can be said that the relations shown in Figs. 13 and 14 are suited for the MLCV system according to the invention. More particularly, the user of the disk and the disk operating system (DOS) regards the partition as one device. Accordingly, the waiting time involved more or lees in the transition from one to another partition presents practically no problems. In the cases shown in Figs. 13 and 14, the zones are not exchanged within one and the same partition. Consequently, the waiting time due to the need for changing the rotation velocity can never be incurred. On the other hand, in the case where the size of the partition is greater than that of the zone, there may arise the recording across the zones even within the same partition. In that case, a waiting time is involved because the rotation velocity must be changed correspondingly. In the case of the schemes illustrated in Figs. 13 and 14, there is imposed a limitation that the size of the partition is inhibited from exceeding that of the zone. However, in the case of the scheme illustrated in Fig. 15, such limitation can be avoided. Thus, the scheme shown in Fig. 15 is preferred when the size of the partition is to be increased although the waiting time may be involved more or less.

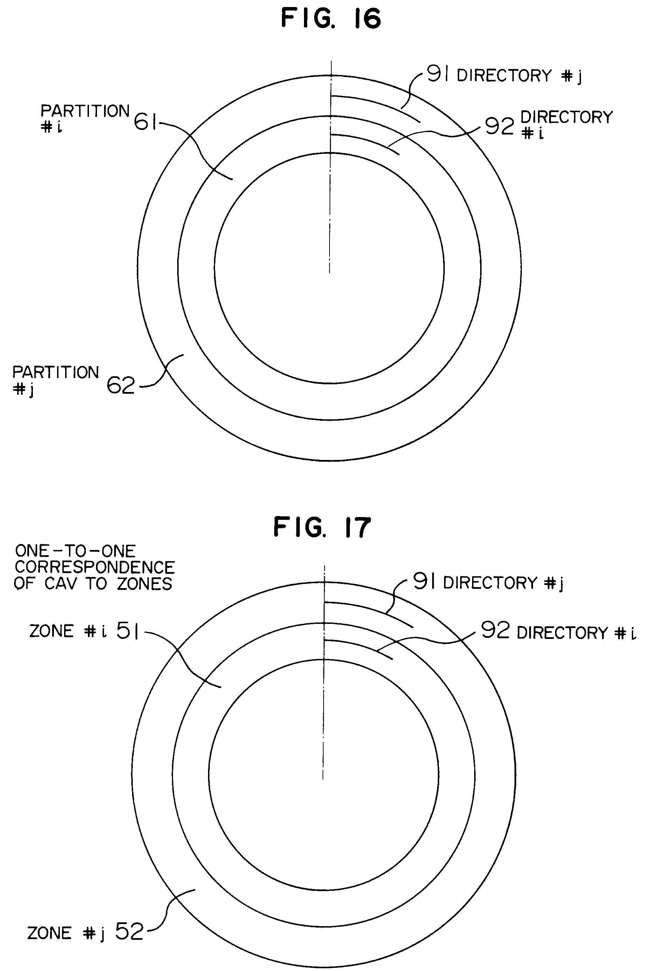

Figs. 16 illustrates a directory managing method on the assumption that a directory area is provided on a partition-by-partition basis, and Fig. 17 illustrates a directory managing method in the case where the directory area is secured on a zone-by-zone basis. The method shown in Fig. 16 is suited for the schemes illustrated in Figs. 13 and 14. Since the disk rotation velocity is constant within a same partition, there arises no need for providing the directory on the zone-by-zone basis. On the other hand, the directory managing method shown in Fig. 17 is suited for the scheme illustrated in Fig. 15. In other words, in the case of the format shown in Fig. 15, a plurality of zones exist within one and the same partition. Accordingly, there may arise such situation in which a series of data are recorded across the zones. When no more than one directory exists in the partition, it is difficult to make decision as to whether the directory is recorded across the zones. In contrast, in case the directory is secured on the zone-by-zone basis, it is possible to control the recording such that a series of data are recorded in one zone.

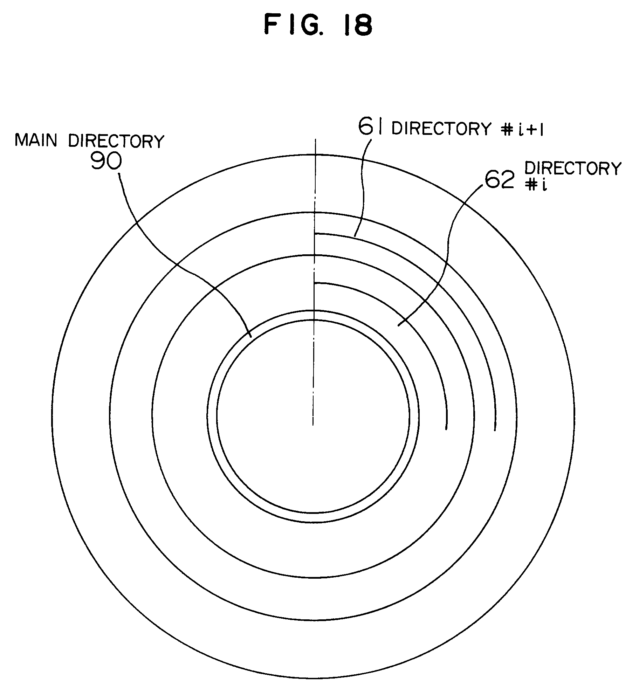

Fig. 18 shows an example in which a main directory is secured on the optical disk medium in addition to the directories shown in Figs. 16 and 17. In this main directory, there may be recorded only the partition information or alternatively the information of all the directories.

When only the partition information is recorded, there arises no necessity for updating the contents of the main directory upon recording of data. On the other hand, recording of all the directory information in the main directory is profitable in case all the information is to be retrieved. However, when data is to be stored or recorded, it becomes necessary to rewrite the information in the main directory by resorting to some measures. In other words, the time required for retrieving all the information can certainly be reduced. However, time is taken every time data is recorded because the content of the main directory must be rewritten upon every storage of data. To cope with this problem, the present invention proposes a method of recording all the file name information of the individual partitions in the main directory. In this case, it is necessary to rewrite the main directory when the file is rewritten. In this conjunction, the present invention proposes a method of updating the file name only when the optical disk is inserted and/or removed for thereby reducing the time taken when the main directory is rewritten every time the file is rewritten. According to the inventive method, a file update flag is set when the optical disk is inserted, and when the file is closed normally, the corresponding file name in the main directory is updated, whereon the above-mentioned flag is reset. This method however suffers a problem when the disk is closed due to interruption of electric power supply before the file is closed normally, i.e., inconvenience that the contents of the disk and the main directory differ from each other. This problem can be solved by updating the file name in the main directory from the directory of each zone or partition unless the aforementioned flag as checked upon insertion of the disk is reset.

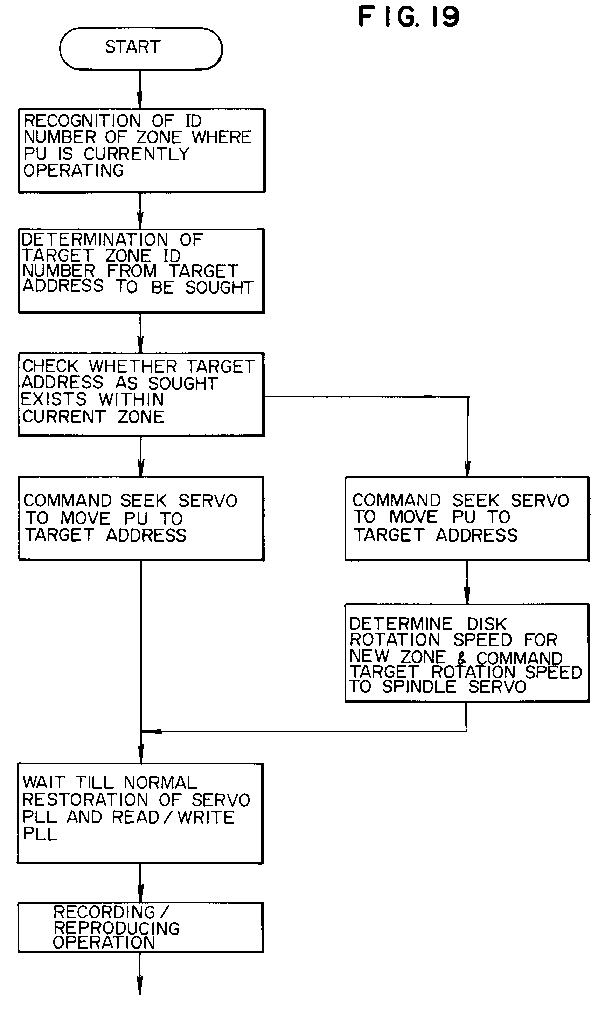

Fig. 19 shows schematically a flow of processings involved in the recording/reproducing operation. Since operation for erasing the record is same as that of the conventional optical disk device, description thereof is omitted. The following description will be made with emphasis put on an access manage or control operation involved owing to the adoption of the MCLV system. In response to reception of a record erase or delete command from an external processing unit such as a computer, the ID number of the zone in which the optical head is currently positioned is recognized. Subsequently, on the basis of the address included in the record command, the ID number of the zone to be sought is computed. After seeking, it is checked whether a desired or target address lies within the same zone. If so, a command is issued to a seek servo system for commanding move of the optical pick-up (head) to the target address, whereupon the processing enters the waiting state until a servo PLL and a read/write PLL are recovered normally. On the other hand, when the seek results in that the target address lies in the other zone than the current, the prescribed rotation velocity for the new zone is calculated simultaneously with movement of the optical head, whereupon a command is issued to a spindle control system for commanding acceleration or deceleration toward the prescribed rotation velocity, which is then followed by the waiting state until the servo PLL and the read/write PLL have been restored normally. Upon normal restoration of the servo PLL and the read/write PLL, the ordinary recording/reproducing operation is performed.

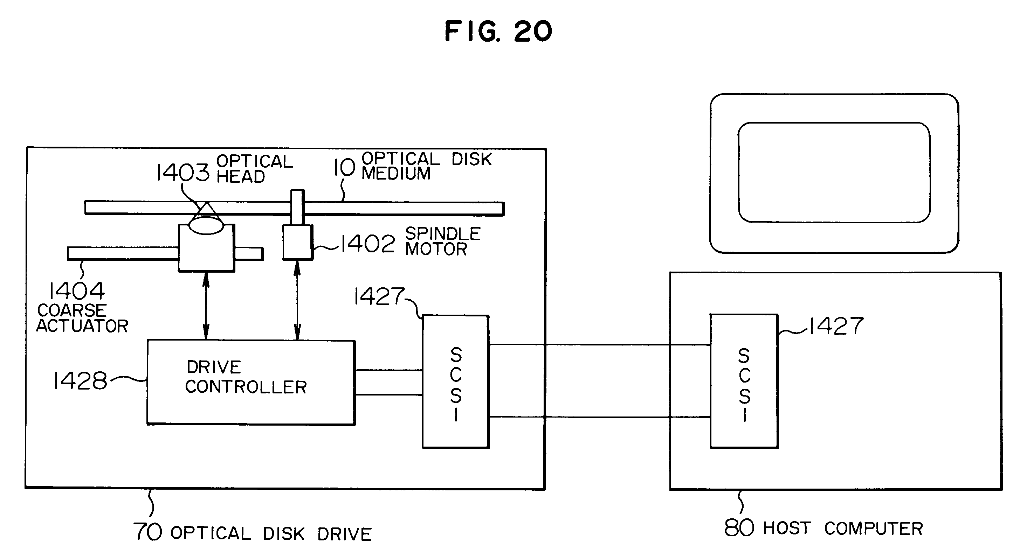

Fig. 20 shows schematically a general arrangement of a system in which an optical disk drive 70 is combined with a host computer 80. The host computer 80 controls the optical disk drive 70 via an interface 1427 such as a SCSI interface or the like. The control commands incoming via the interface 1427 are analyzed by a drive controller 1428 for controlling correspondingly a spindle motor 1402, an optical head 1403 and a coarse actuator 1404 to thereby effectuate the recording/reproducing operation.

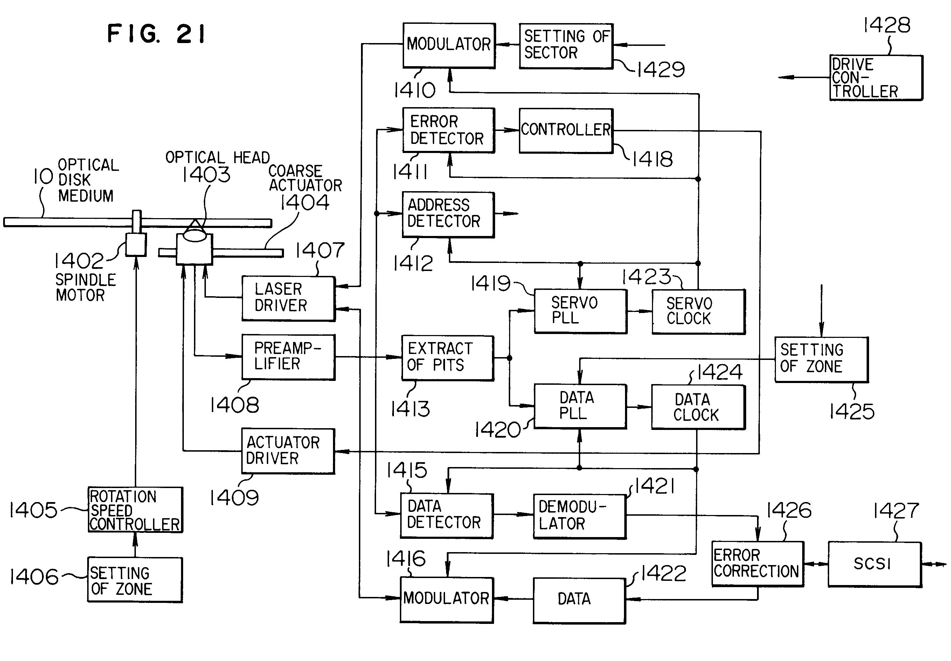

Fig. 21 shows a general arrangement of a phase-change type optical disk drive controller 1428 which is based on the sampled servo principle. In response to a zone setting command 1482 issued from the drive controller 1428, a rotation speed controller 1405 controls the rotation velocity of the spindle motor 1402 to thereby cause the optical disk medium 10 to rotate at a commanded velocity. A laser driver 1407 activates a semiconductor laser incorporated in the optical head 1403, whereby the optical disk medium 10 is illuminated with a laser beam. A reflected light beam from the optical disk medium 10 is received by a photodetector also incorporated in the optical head 1403 to be thereby converted into a corresponding electric signal which is then amplified through a preamplifier 1408 to be processed for reproducing the information recorded on the optical disk medium as an RF signal. Subsequently, pit signal components are extracted from an amplitude pattern of the RF signal to be utilized for generating a reference clock for the servo control through the servo PLL 1419 and a servo clock 1423. On the basis of this reference clock signal, a servo signal for focusing and tracking operation as well as the track and sector addresses are generated. At first, the sector mark is detected by an address detector 1412. From the sector mark as defected, the track address and the sector address are determined. On the other hand, deviation signals for the focusing control and the tracking control are derived from the servo signal by an error detector 1411 through time-sharing operation. The controller 1418 drives an actuator driver 1409 for a two-dimensional actuator of the optical head 1403 to thereby realize the focusing control as well as the tracking control.

In the optical disk system according to the present invention, the servo system PLL is variable in respect to the oscillation frequency and can reproduce the servo mark recorded in the CAV format at different rotation numbers. On the other hand, the data PLL system oscillates at a single frequency in the MCLV mode. Accordingly, the recording density remains substantially constant along the whole circumference.

With a basically same circuit configuration, the servo PLL can be operated at a single frequency with a constant disk rotation speed while the data PLL can oscillate at variable frequency. In this manner, the recording reproduction can easily be performed in the MCAV (Modulated Constant Angular Velocity) mode. Since the recording/reproduction is performed on the optical disk preformatted in the CAV format by using two PLLs, i.e., the servo PLL and the data PLL according to the invention, it is possible to realize the CAV, MCLV, MCAV and other recordings on a single disk, to an advantage.

Recording of the sector address 31 upon initialization is performed on the optical disk medium by driving the laser driver 1407 through modulation of the reference clock for the servo system on the basis of a sector set command 1428.

On the other hand, the standard clock for the data is generated by the data PLL 1420 on the basis of the data clock 1424 contained in the reproduced RF signal. With reference to this standard clock, modulation is performed for recording or reproducing the data. Data reproduced through demodulation by a demodulator 1421 or data to be recorded as outputted from a modulator 1416 undergoes error correction processing through an error correcting unit 1426 as well as interleave processing. The data to be recorded as well as data as reproduced is transferred with the host computer through the interface 1427. Operation of the drive controller 1428 is controlled by a built-in microprocessor.

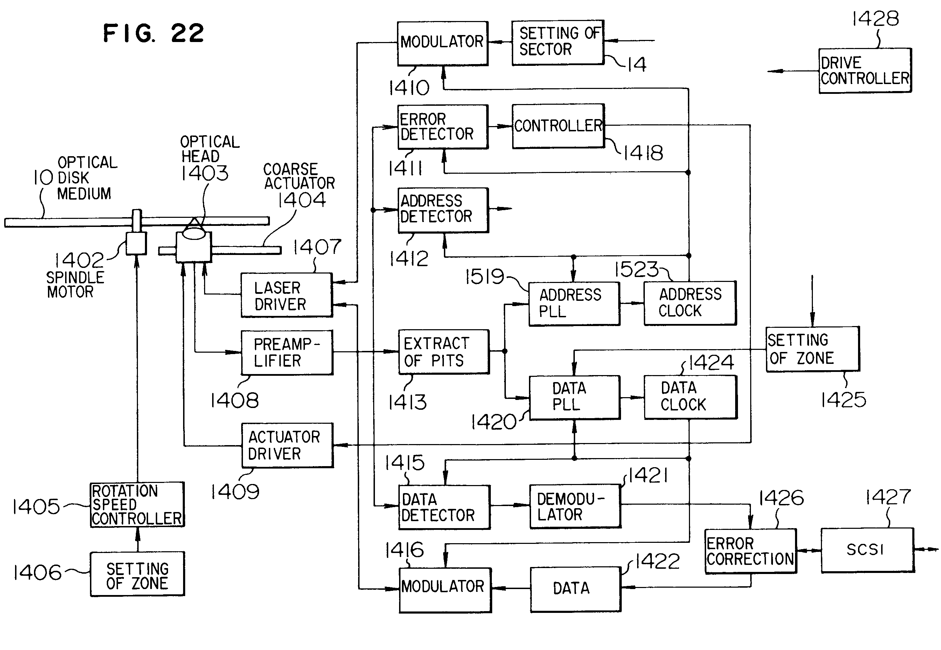

Fig. 22 shows schematically a general arrangement of the phase-change type optical disk drive incorporating a continuous servo system. Differing from the sampled servo system, the standard clock generation for the address is effected through an address PLL 1519 on the basis of an address clock 1523. Detection of the address field is realized with the aid of the sector mark and the synchronization mark, while detection of the data field is realized by detecting the sector mark and the data SYNC. Other operation is similar to that of the sampled servo system described hereinbefore.

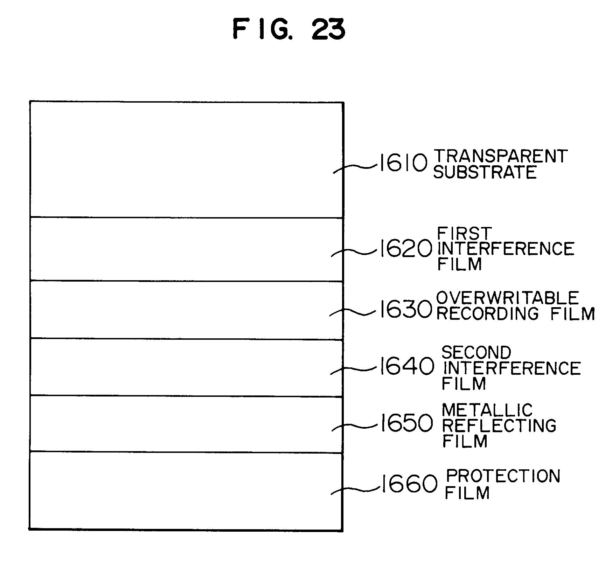

Fig. 23 shows an example of a multi-film structure of a phase-change type optical disk medium profitably suited for use in carrying out the invention. The optical disk medium as illustrated is comprised of a transparent substrate 1610 such as glass, polycarbonate, PMMA or the like, a first interference layer or film 1610 formed of a transparent dielectric material such as SiN, AlN, ZnS or the like having a reflectivity index twice as high as that of the substrate, an overwritable recording film 1630 formed of a material such as InSbTe, GeSbTe or the like, a second interference film 1640 formed of a transparent dielectric material similar to that of the first interference film, a metallic reflecting film 1650 formed of a metal such as Au, Al or the like and a protection film 1660 formed of a material such as $SiO_2$ or a UV resin which are deposited sequentially in this order. With this optical disk medium, new information or data can straightforwardly be overwritten on the existing information solely through illumination with a laser beam.

By employing a magnetooptic type recording film such as of Te Fe Co series or the like in place of the phase-change type optical recording film, it is possible to manufacture a magnetooptical type optical disk medium with a basically same structure as that shown in Fig. 23.

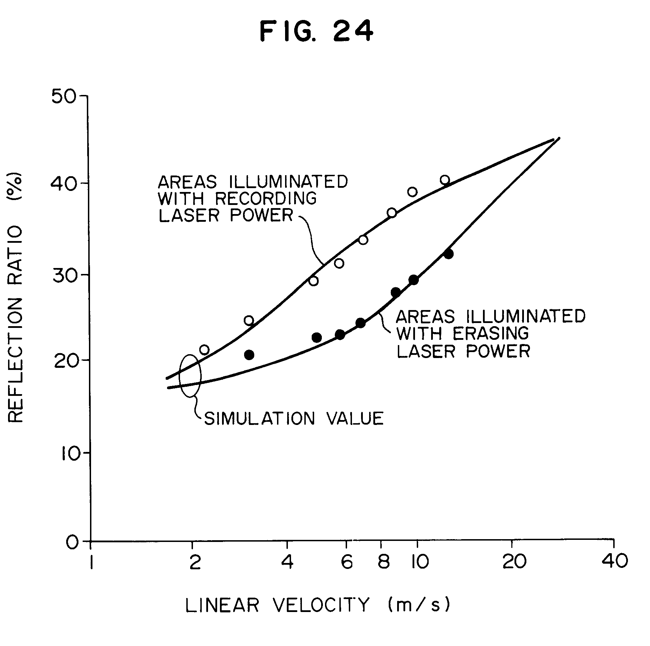

Fig. 24 shows graphically results of experiments and analyses conducted for determining the linear-velocity dependence of the recording characteristics of the optical disk medium according to the invention. The multi-layer structure of the optical disk medium employed in the experiment is same as that shown in Fig. 22, wherein the substrate thereof is formed of polycarbonate in a diameter of 130 mm, on which the first interference film of SiN, the reflecting film of Au and the protection film of $SiO_2$ are deposited sequentially in thicknesses of 70 nm, 150 nm and 200 nm, respectively, by using a high-frequency sputtering method. The experiment was performed by using an optical disk drive of the sampled servo type in the CAV mode, wherein the optical disk medium was rotated at a velocity of 1800 rpm. The linear velocity was changed by changing the disk radius for the recording/ reproduction, and the reflectivity of the track was measured upon recording and erasure, respectively. At that time, the recording power was maintained constant at 15 mW while the power for erasure was maintained constant at 10 mW. As can be seen from Fig. 24, the reflectivities of the recorded area and the erased area increase as the linear velocity increases. This is because the cooling rate at a melting point which plays a determinative role in making the recorded film to be amorphous increases as the linear velocity increases. In the case of the optical disk now under consideration, the linear velocities at the innermost and outermost peripheries are about 5.5 m/s and 11 m/s, respectively. Although satisfactory contrast can be assured within this range, the change in the reflectivity level is likely to involve errors in the recording and the reproduction because the margin of the whole system is reduced. Such linear-velocity dependence makes appearance not only in the phase change type optical disk but also in the magnetooptic type optical disk. Accordingly, in order to enhance the reliability of the record/reproduction of the optical recording medium, it is desirable that the linear velocity is constant. In the case of the optical disk according to the present invention in which the MCLV system is adopted, the range of variation in the linear velocity becomes narrowed in inverse proportion to the number of zones as divided. By way of example, when the whole area is equally divided into six zones, variation in the linear velocity is limited to within 1 m/s. As can be seen from the experimental results illustrated in Fig. 24, variation in the reflectivity of the recorded and erased areas is diminished to a level which gives rise to no problems in practical applications.

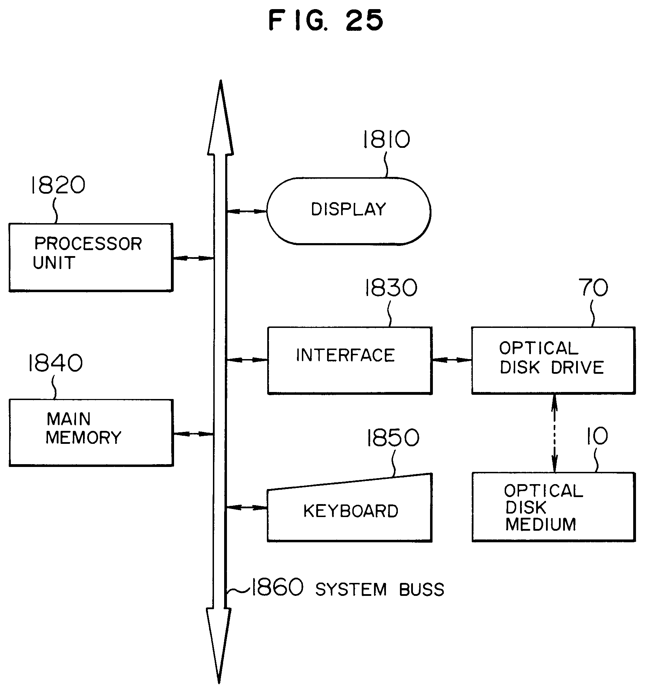

Fig. 25 shows schematically a system in which the optical disk drive shown in Figs. 21 and 22 is connected to a so-called personal computer. A data processing part of the personal computer is comprised of a processor unit 1820 and a main semiconductor memory 1840, wherein a keyboard 1850 and a display 1810 are connected to the data processing part via a system bus 1860. According to the present invention, the optical disk driver 70 is additionally connected to the personal computer via an interface 1830. The optical disk medium 10 of 2.5 inches in outer diameter has a large capacity of 100 MB, whereby the personal computer equipped with the optical disk drive can perform a large scale data processing which is comparable to that of a work station. Of course, the he optical disk medium 10 can be removed from the drive device 70. According, data resulting from the processing can be stored in the optical disk medium for transportation.

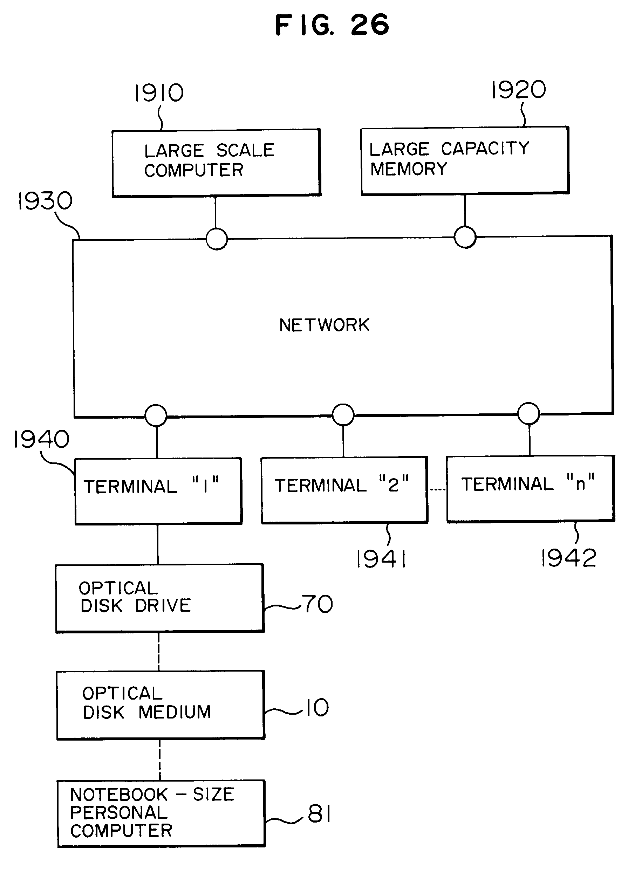

Fig. 26 is a block diagram showing a system in which the optical disk medium 10 is made use of as an interface between a notebook-size personal computer 81 and a terminal of a large scale computer. Referring to the figure, the large scale computer 1910 is usually equipped with a memory 1920 of a large capacity such as a fixed magnetic disk or the like, wherein a large number of terminals 1940, 1941 and 1942 are connected to the large scale computer 1910 via a network. This system however suffers from a problem that utilization of the system is impossible at a location where no terminal is installed. This problem can be solved according to the invention. More specifically, the optical disk medium 10 is used not only in the notebook-size personal computer but also in the terminal 1940 of the large scale computer as a memory. In that case, programming as well as debugging of a program can be performed at home or even in a moving electric car or the like vehicle where the terminal is unavailable.

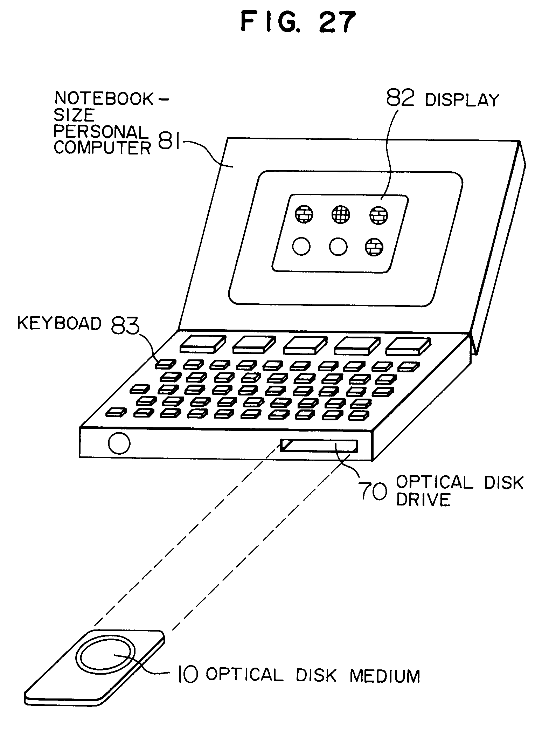

Fig. 27 shows schematically a system configuration of a notebook-size personal computer which incorporates an optical disk driver according to the invention. The notebook-size personal computer 81 is equipped with a liquid crystal display 82 on a keyboard 83 and incorporates an optical disk driver 70. By placing an optical disk medium 10 within the optical disk driver 70, information recorded on the optical disk medium 10 can be reproduced and/or edited in the notebook-size personal computer.

As is apparent from the foregoing description, it is possible according to the teachings of the invention to perform the servo control upon accessing the MCLV zone by virtue of provision of two different PLL systems for the servo and the data, respectively. Further, owing to the capability of overwriting the sector address, the partition capacity can arbitrarily be selected in the MCLV optical disk medium, whereby a single optical disk medium can be used in both the CAV system and the MCLV system. Besides, by setting the relation of capacity between the partition and the zone at 1 : n or n : 1, the waiting time involved in the access due to rotation of the motor can be suppressed to a minimum, whereby a high-velocity access comparable to that of the CAV disk and a large capacity comparable to that of the CLV disk can simultaneously be realized. By using the optical disk medium according to the invention in the information processing apparatus typified by the personal computer, there can be realized an optical memory system which allows data of a large volume such as audio data, image data or the like to be edited with a high flexibility and facility.

**Claims**

1. An optical disk system, comprising:

    an optical disk medium (10) on which information can be recorded or from which information can be reproduced;

    recording/reproducing means (1403,1428) for recording and/or reproducing information on and/or from said optical disk medium (10); and

    driving means (1402) for driving said optical disk medium (10);

    wherein said recording/reproducing means includes means for generating from a reproduced signal a pair of reference clocks (1423,1424), one for servo reference and the other for data reference.

2. An optical disk system according to claim 1, wherein a servo mark (100) and an address mark (153) of said optical disk medium (10) are reproduced by using said servo reference clock (1423), while data is reproduced by using said data reference clock (1424).

3. An optical disk system according to claim 1, wherein focusing error and tracking error of said recording/reproducing means (1403,1428) are generated with reference to said servo reference clock (1423).

4. An optical disk system, comprising:

    an optical disk medium (10) on which information can be recorded and/or from which information can be reproduced;

    recording/reproducing means (1403) for recording and/or reproducing information on and/or from said optical disk medium (10); and

    driving means (1402) for driving said optical disk medium (10);

    first control means (1428) for controlling recording/reproducing operation performed on said optical disk medium divided into a plurality of zones (51,52) at a substantially constant peripheral velocity (circumferential velocity) on a zone-by-zone basis;

    second control means (1428) for controlling recording and/or reproducing operation performed on said optical disk medium at a constant angular velocity thereof over all the zones into which said optical disk medium is divided; and

    discriminating means for discriminating the recording and/or reproducing operation performed on said track-by-track basis from the recording and/or reproducing operation performed at said constant angular velocity for all of said zones.

5. An optical disk system, comprising:

    an optical disk medium (10) on which information can be recorded on from which information can be reproduced;

    recording/reproducing means (1403) for recording or reproducing information on or from said optical disk medium (10); and

    driving means (1402) for driving said optical disk medium (10);

    first control means (1428) for controlling recording and/or reproducing operation performed on a single zone provided by said optical disk medium at a substantially constant peripheral velocity;

    second control means (1428) for controlling recording and/or reproducing operation performed on said zone at a constant angular velocity; and

    discriminating means for discriminating the recording and/or reproducing operation performed at said substantially constant peripheral velocity from the recording and/or reproducing operation performed at said constant angular velocity.

6. An optical disk system, comprising:

    an optical disk medium (10) on which information can be recorded or from which information can be reproduced;

    recording/reproducing means (1403) for recording and/or reproducing information on and/or from said optical disk medium (10);

    driving means (1402) for driving said optical disk medium (10);

    means for writing sector addresses (31) into said recording/reproducing means (1403) upon initialization of said optical disk medium (10); and

    means for dividing an information recording surface of said optical disk medium into areas (51,52) and setting rotation number of said disk (10) upon recording or reproducing operation to discrete values for said divided areas (51,52), respectively.

7. An optical disk system according to claim 6, wherein said sector address writing means has a function for writing the sector addresses (31) onto said optical disk medium (10) together with sector marks (153) for sector identification.

8. An optical disk system, comprising:

    an optical disk medium (10) on which information can be recorded or from which information can be reproduced;

recording/reproducing means (1403) for recording and/or reproducing information on and/or from said optical disk medium (10);

driving means (1402) for driving said optical disk medium (10);

means for writing sector address (31) upon initialization of said optical disk medium (10);

means for dividing an information recording surface of said optical disk medium (10) into areas (51,52); and

sector number setting means for setting a number of sectors per track (20) for each of said areas (51,52).

9. An optical disk system according to claim 8, wherein said sector number setting means includes means for setting a storage capacity of each of said areas at a ratio of 1 to $n$ or alternatively $n$ to 1 relative to a storage capacity of a logical drive unit designated by the user, where $n$ represents a natural number.

10. An optical disk system, comprising:

an optical disk medium (10) having rows of pits formed thereon such that a center angle formed between two adjacent pits on a same track (20) at a center of said optical disk medium (10) has a minimum unit $\alpha$, wherein where interval between said pits becomes an integral multiple of said minimum unit $\alpha$, wobble pits (101) are formed in a substrate of said optical disk medium (10) in radial arrays at a unit center angle $\alpha$;

sector address write means for writing sector address (31) so as to have the same unit center angle as that of said wobble pits (101); and

means for dividing an information recording surface of said optical disk medium (10) into $n$ coaxial circular or spiral areas (51,52) and performing data recording/reproducing operation such that unit center angles $\beta_1$, $\beta_2$, ..., $\beta_n$ of data pits in the individual areas in the direction from outer to inner periphery bear such relations that $\alpha \geq \beta_1 \geq \beta_2 \geq ... \geq \beta_n$.

11. An optical disk system, comprising:

an optical disk medium (10) on which information can be recorded and/or from which information can be reproduced, said disk medium (10) being preformatted with track addresses (21) and servo marks (100) at a constant angular density in correspondence to recording/reproduction at a constant angular velocity, each of sectors of said optical disk medium being comprised of segments (120) each including said servo mark (100) and a data area (157) and constituting a minimum unit for the recording and/or reproduction of information;

recording/reproducing means (1403) for recording information on said optical disk medium and/or reproducing information therefrom; and

rotating means (1402) for rotating said optical disk medium (10);

wherein said optical disk medium (10) is divided into a plurality of coaxial circular zones (51,52) in each of which data storage capacity per segment is increased in the direction from the innermost periphery zone toward the outermost periphery zone to thereby allow data recording or reproduction to be performed such that linear data density remains substantially constant.

12. An optical disk system, comprising:

an optical disk medium (10) on which information can be recorded and/or from which information can be reproduced, said disk medium (10) being preformatted with track addresses (21) and servo marks (100) at a constant angular density in correspondence to recording/reproduction at a constant angular velocity, each of sectors of said optical disk medium (10) being comprised of segments (120) each including said servo mark (100) and a data area (157) and constituting a minimum unit for the recording and/or reproduction of information;

recording/reproducing means (1403) for recording information on said optical disk medium (10) and/or reproducing information therefrom; and

rotating means (1402) for rotating said optical disk medium (10);

wherein said optical disk medium (10) is divided into $n$ coaxial circular zones (51,52) each having a same width, and wherein a number of said zones is determined for the recording and/or reproduction such that the following relation is satisfied:

$$S(i) = S(1) + S(1)(i - 1)/(n - 1)$$

where S(i) represents a data storage capacity per segment (120) of the i-th zone as counted from a first zone located at the innermost periphery to the n-th zone located at the outermost periphery, and where S(i) is given by a natural number.

13. An optical disk medium, comprising:

clock and wobble pits (101,102) formed in a substrate of said optical disk medium (10) in radial arrays; and

sector addresses (31) written additionally on an information recording surface of said optical disk medium (10),

said clock and wobble pits (101,102) and said sector addresses (31) having a same unit center angle $\alpha$;

wherein said information recording surface of said optical disk medium is divided into n coaxial circular or spiral zones (51,52) such that unit center angles $\beta_1$, $\beta_2$, ..., $\beta_n$ of the data pits of individual zone satisfies such relation that $\alpha \geq \beta_1 \geq \beta_2 \geq ... \geq \beta_n$ in the direction as viewed from the innermost periphery toward the outmost periphery of said information recording area.

14. An optical disk system, comprising:

an optical disk medium (10) having track addresses (21) preformatted and sector addresses (31) optically overwritten, said track addresses (21) and said sector addresses (31) having a same unit center angle $\alpha$, said optical disk medium (10) being divided into more than one coaxial circular or spiral areas (51,52), in each of which data can be recorded at a unit center angle not greater than $\alpha$;

an optical head (1403) for recording and/or reproducing information by illuminating said optical disk (10) medium with a focussed laser beam;

driving means (1402) for rotating said optical disk (10) medium at a constant rotational velocity substantially in proportion to a radius of a zone on said optical disk medium (10) which is illuminated with the laser beam by said optical head (1403);

a first PLL tuning circuit (1419) operatable with a tuning frequency variable within approximately twice as large a range for reproducing the track addresses (21) and the sector addresses (31) from the information optically reproduced from said optical disk medium (10) by said optical head (1403); and

a second PLL tuning circuit (1420) operating at a substantially constant frequency for reproducing user information.

15. An information processing system, comprising:

input means (1850) for generating commands for recording information;

information recording/reproducing means (1403,1428) for recording on a recording medium (10) of a large capacity and reproducing said recorded information in accordance with the commands inputted from said input means (1850); and

at least one of display means (1810) for reproducing and displaying said input recorded information and recording means for recording said input or recorded information on a recording sheet;

wherein said information recording/reproducing means includes:

an optical disk medium (10) on which information is recorded and/or from which information is reproduced;

first clock generator means (1519,1523) for controlling a servo system operated when information recording or reproducing operation is performed on said optical disk medium,

second clock generator means (1520,1524) for generating a clock signal for recording and/or reproduction of data;

means for overwriting sector addresses (31) in said optical disk medium (10) upon initialization thereof; and

control means (1405) for controlling drive means (1402) for the optical recording medium (10) selectively at a constant peripheral velocity and at a constant angular velocity in dependence on recording formats in which information is recorded on the single optical disk medium (10).

# FIG. 1

10 OPTICAL DISK MEDIUM

100 SERVO MARK

TRACK 20

21 TRACK ADDRESS

40 DISK ID

# FIG. 2

120 SEGMENT

101 WOBBLE PIT
102 CLOCK PIT

TRACK 20

| DATA FIELD | | DATA FIELD | | DATA FIELD |

157  100 SERVO MARK  157  100 SERVO MARK  157

# FIG. 3

157 DATA FIELD

TRACK 20

| | SECTOR MARK | SECTOR ADDRESS | |

153  31

# FIG. 4

OPTICAL DISK MEDIUM
10

TRACK 20

21 TRACK
ADDRESS

40 DISK ID

# FIG. 5

30 SECTOR

TRACK 20 {

DATA FIELD

203 SYNCHRONIZATION
MARK

207

# FIG. 6

10 OPTICAL DISK MEDIUM

100 SERVO MARK

DISK ID 40

21 TRACK ADDRESS

TRACK 20

301 PARTITION INFORMATION STORAGE AREA

# FIG. 7

10 OPTICAL DISK MEDIUM

100 SERVO MARK

21 TRACK ADDRESS

SYSTEM INFORMATION STORAGE AREA 401

20 TRACK

40 DISK ID

# FIG. 8

```
        START OF
      INITIALIZATION

    READING OF
    USER
    DESIGNATED        ~501
    INFORMATION

    READING OF        ~502
    DISK ID

    FETCHING OF
    DRIVE             ~503
    INFORMATION

    GENERATION OF
    SYSTEM            ~504
    INFORMATION

    DISPLAY OF
    SYSTEM            ~505
    INFORMATION

         OK ?         506

    WRITING OF
    SYSTEM            ~507
    INFORMATION

          END
```

# F I G. 9

# F I G. 10

# FIG. II

10 OPTICAL DISK MEDIUM

30 SECTOR

ZONE #9

#3
#2
#1

120 SEGMENT

100 SERVO MARK

157 DATA FIELD

N×2 BYTES

N+2N/8

N+N/8

N

ZONE #9

#3
#2
#1

# F IG. 12

START

READING OF
DISK ID  ～701

READING OF
DRIVE INFORMATION  ～702

CREATION OF
PARTITION SECTOR
MANAGE TABLE  ～703

END

# F I G. 13

| PARTITION #$i$ | PARTITION #$i+1$ | PARTITION #$i+2$ |
|---|---|---|
| ZONE #$n$ || |

# F I G. 14

| PARTITION #$i$ | PARTITION #$i+1$ | PARTITION #$i+2$ |
|---|---|---|
| ZONE #$n$ | ZONE #$n+1$ | ZONE #$n+2$ |

# F I G. 15

| PARTITION #$i$ || |
|---|---|---|
| ZONE #$n$ | ZONE #$n+1$ | ZONE #$n+2$ |

# FIG. 16

PARTITION #i 61

PARTITION #j 62

91 DIRECTORY #j

92 DIRECTORY #i

# FIG. 17

ONE-TO-ONE
CORRESPONDENCE
OF CAV TO ZONES

ZONE #i 51

ZONE #j 52

91 DIRECTORY #j

92 DIRECTORY #i

# FIG. 18

MAIN DIRECTORY 90

61 DIRECTORY #i+1

62 DIRECTORY #i

# F I G. 19

```
        ┌─────────────┐
        │    START    │
        └──────┬──────┘
               │
               ▼
┌──────────────────────────┐
│ RECOGNITION OF ID        │
│ NUMBER OF ZONE WHERE     │
│ PU IS CURRENTLY          │
│ OPERATING                │
└──────────┬───────────────┘
           │
           ▼
┌──────────────────────────┐
│ DETERMINATION OF         │
│ TARGET ZONE ID           │
│ NUMBER FROM TARGET       │
│ ADDRESS TO BE SOUGHT     │
└──────────┬───────────────┘
           │
           ▼
┌──────────────────────────┐
│ CHECK WHETHER TARGET     ├──────────────────────┐
│ ADDRESS AS SOUGHT        │                      │
│ EXISTS WITHIN            │                      │
│ CURRENT ZONE             │                      │
└──────────┬───────────────┘                      │
           │                                       ▼
           ▼                          ┌──────────────────────────┐
┌──────────────────────────┐          │ COMMAND SEEK SERVO       │
│ COMMAND SEEK SERVO       │          │ TO MOVE PU TO            │
│ TO MOVE PU TO            │          │ TARGET ADDRESS           │
│ TARGET ADDRESS           │          └──────────┬───────────────┘
└──────────┬───────────────┘                     │
           │                                       ▼
           │                          ┌──────────────────────────┐
           │                          │ DETERMINE DISK           │
           │                          │ ROTATION SPEED FOR       │
           │                          │ NEW ZONE & COMMAND       │
           │                          │ TARGET ROTATION SPEED    │
           │                          │ TO SPINDLE SERVO         │
           │                          └──────────┬───────────────┘
           │◄────────────────────────────────────┘
           ▼
┌──────────────────────────┐
│ WAIT TILL NORMAL         │
│ RESTORATION OF SERVO     │
│ PLL AND READ / WRITE     │
│ PLL                      │
└──────────┬───────────────┘
           │
           ▼
┌──────────────────────────┐
│ RECORDING /              │
│ REPRODUCING              │
│ OPERATION                │
└──────────┬───────────────┘
           │
           ▼
```

25

# FIG. 20

1403 OPTICAL HEAD

10 OPTICAL DISK MEDIUM

1402 SPINDLE MOTOR

1404 COARSE ACTUATOR

1427

1428

DRIVE CONTROLLER

SCSI

SCSI

1427

70 OPTICAL DISK DRIVE

80 HOST COMPUTER

EP 0 587 019 A2

# FIG. 21

MODULATOR — SETTING OF SECTOR — 1429

1428 — DRIVE CON-TROLLER

1410

ERROR DETECTOR — CONTROLLER — 1418

1411

OPTICAL DISK MEDIUM — 10

OPTICAL HEAD — 1403 — COARSE ACTUATOR — 1404

ADDRESS DETECTOR — 1412

1402 SPINDLE MOTOR

1407

1419 — SERVO PLL — SERVO CLOCK — 1423

LASER DRIVER — 1407

SETTING OF ZONE — 1425

PREAMP-LIFIER — 1408

EXTRACT OF PITS — 1413

DATA PLL — 1420 — DATA CLOCK — 1424

ACTUATOR DRIVER — 1409

1415

ROTATION SPEED CONTROLLER — 1405

DATA DETECTOR — 1416 — DEMODU-LATOR — 1421

ERROR CORRECTION — 1426 — SCSI — 1427

SETTING OF ZONE — 1406

MODULATOR — 1416 — DATA — 1422

EP 0 587 019 A2

# FIG. 22

EP 0 587 019 A2

# F I G. 23

1610 TRANSPARENT SUBSTRATE

1620 FIRST INTERFERENCE FILM

1630 OVERWRITABLE RECORDING FILM

1640 SECOND INTERFERENCE FILM

1650 METALLIC REFLECTING FILM

1660 PROTECTION FILM

## FIG. 24

# F IG. 25

1810

1820

DISPLAY

PROCESSOR
UNIT

1830

70

1840

INTERFACE

OPTICAL
DISK DRIVE

MAIN
MEMORY

1850

10

KEYBOARD

OPTICAL
DISK
MEDIUM

1860 SYSTEM BUSS

# FIG. 26

```
        1910                          1920
   ┌──────────────┐            ┌──────────────┐
   │ LARGE  SCALE │            │LARGE CAPACITY│
   │  COMPUTER    │            │   MEMORY     │
   └──────────────┘            └──────────────┘
1930        │                          │
   ┌────────●─────────────────────────●──────────────┐
   │                                                  │
   │                   NETWORK                        │
   │                                                  │
   └────●──────────────────●──────────────●───────────┘
        │                  │              │
1940    │                  │              │
   ┌──────────────┐  ┌──────────────┐  ┌──────────────┐
   │ TERMINAL "1" │  │ TERMINAL "2" │··│ TERMINAL "n" │
   └──────────────┘  └──────────────┘  └──────────────┘
        │                  │              │
   ┌──────────────┐       1941           1942
   │  OPTICAL     │
   │  DISK DRIVE  │──70
   └──────────────┘
        ┊
   ┌──────────────┐
   │  OPTICAL     │
   │  DISK MEDIUM │──10
   └──────────────┘
        ┊
   ┌──────────────┐
   │NOTEBOOK─SIZE │
   │ PERSONAL     │──81
   │ COMPUTER     │
   └──────────────┘
```

# F I G. 27

NOTEBOOK-
SIZE
PERSONAL
COMPUTER 81

82 DISPLAY

KEYBOAD 83

70 OPTICAL DISK DRIVE

IO OPTICAL DISK MEDIUM